# EUROPEAN PATENT SPECIFICATION

(11) **EP 2 712 886 B1**
(45) Date of publication and mention of the grant of the patent: **24.06.2015**
(21) Application number: 13185555.3
(22) Date of filing: 23.09.2013
(51) Int. Cl.: C08K 3/04, B60C 1/00, C08L 9/00, C08K 3/06, C08K 5/548, C08K 9/06

(54) **TIRE HAVING SYNTHETIC RUBBER BASED OUTER RUBBER SIDEWALL**
REIFEN MIT SYNTHETISCHER KAUTSCHUKBASIERTER ÄUßERER GUMMISEITENWAND
PNEU COMPORTANT UNE PAROI LATÉRALE EXTERNE EN CAOUTCHOUC À BASE DE CAOUTCHOUC SYNTHÉTIQUE

(30) Priority: 26.09.2012 US 201213627596
(43) Date of publication of application: 02.04.2014
(73) Proprietor: The Goodyear Tire & Rubber Company, Akron, Ohio 44316 (US)
(72) Inventor: Sandstrom, Paul Harry, Cuyahoga Falls, Ohio 44223 (US); Frantz, David Mark, Norton, Ohio 44203 (US)
(74) Representative: Kutsch, Bernd

(56) References cited:
- EP-A1- 0 560 182
- GB-A- 1 151 679
- GB-A- 1 247 100

## Description

### Field of the Invention

This invention relates to a tire with an outer rubber sidewall layer containing elastomers consisting of synthetic elastomers.

### Background of the Invention

Pneumatic rubber tires conventionally have relatively thin, atmospherically exposed, outer rubber sidewall layers comprising a combination of natural cis 1,4-polyisoprene rubber and synthetic 1,4-polybutadiene rubber.

Such tire sidewall rubber layers are normally expected to be subject to significant punishment under tire service conditions by undergoing considerable dynamic distortion and flexing, abrasion due to scuffing, fatigue cracking and weathering such as, for example, atmospheric ozone aging.

A challenge is presented of providing a tire sidewall composed of a combination of synthetic elastomers in place of the combination of natural cis 1,4-polyisoprene and synthetic 1,4-polybutadiene rubbers.

A motivation for such challenge is a desire for a natural rubber alternative, at least a partial alternative, in a form of a synthetic rubber to offset relative availability and/or cost considerations of natural rubber.

Such alternative tire sidewall rubber composition represents a challenge in a sense of substantially replicating physical properties of a rubber composition comprising a combination of natural cis 1,4-polyisoprene rubber and synthetic 1,4-polybutadiene rubber.

Significant physical properties for the combination of natural rubber/1,4-polybutadiene rubber based tire sidewall rubber compositions are considered herein to be, for example, rebound (at 100°C) and tan delta (at 100°C) which contribute to rolling resistance of the tire and therefore fuel economy of the associated vehicle, with higher values being desired for the rebound property and lower values being desired for the tan delta property.

Further desirable properties which might be desired for the sidewall rubber composition include relatively high tear strength to promote resistance to sidewall damage and good crack growth resistance to prevent, or retard, growth of small cuts that might occur in the exposed outer rubber sidewall layer. Building tack for the uncured rubber composition is also important during the building and shaping of the tire prior to curing and the aforesaid ozone weathering resistance for the visible, exposed, cured rubber sidewall.

Accordingly, it is readily considered that an inclusion of a synthetic rubber, in addition to the synthetic cis 1,4-polybutadiene rubber contained in a tire outer sidewall rubber composition is not a simple matter and requires more than routine experimentation, where it is desired to substantially retain, or improve upon, a suitable balance of the representative physical properties of a natural rubber/cis 1,4-polybutadiene based sidewall rubber composition and the processing of the sidewall rubber composition during the tire building process.

For this invention, it is proposed to evaluate an inclusion of a synthetic trans 1,4-polyisoprene rubber, particularly a trans 1,4-polyisoprene rubber having a trans 1,4-isomeric content of at least 95 percent and a Mooney (ML 1+4) viscosity (100°C) value in its uncured state in a range of from 20 and 100, alternately in a range of from 40 and 80.

The Mooney (ML 1+4) viscosity at 100°C relates to its "Mooney Large" viscosity, taken at 100°C using a one minute warm up time and a four minute period of viscosity measurement, a procedural method well known to those having skill in such art.

In the description of this invention, the terms "compounded" rubber compositions and "compounds", where used refer to the respective rubber compositions which have been compounded with appropriate compounding ingredients such as, for example, carbon black, oil, stearic acid, zinc oxide, silica, wax, antidegradants, resin(s), sulfur and accelerator(s) and silica and silica coupler where appropriate. The terms "rubber" and "elastomer" may be used interchangeably. The amounts of materials are usually expressed in parts of material per 100 parts of rubber polymer by weight (phr).

### Disclosure and Practice of the Invention

The invention relates to a tire in accordance with claim 1.

Dependent claims refer to preferred embodiments of the invention.

In accordance with a preferred aspect of this invention, a tire having an outer, visible, rubber sidewall layer is provided wherein said sidewall layer is a rubber composition comprising, based upon parts by weight per 100 parts by weight rubber (phr):
(A) elastomers consisting of synthetic conjugated diene based elastomers consisting of:
   (1) 1 to 20 phr, alternately 2 to 10 phr, of synthetic trans 1,4-polyisoprene having trans 1,4- isomeric content of at least 95 percent;
   (2) 30 to 70 phr, alternately 45 to 65,
      phr of:
      (a) synthetic cis 1,4-polybutadiene rubber having a cis 1,4-isomeric content of at least 95 percent, or
      (b) synthetic polybutadiene rubber having a cis 1,4-isomeric content in a range of from 20 to 50 percent, a trans 1,4-isomeric content in a range of from 40 to 70 percent, and a vinyl 1,2 content in a range of from 5 to 15 percent; and
   (3) 20 to 60 phr, alternately 25 to 55,
      phr of synthetic cis 1,4-polyisoprene rubber having a cis 1,4- isomeric content of at least 95 percent;
(B) 30 to 70, alternately from 40 to 60, phr of particulate reinforcing fillers comprising:
   (1) rubber reinforcing carbon black, or
   (2) a combination of rubber reinforcing carbon black and silica, preferably amorphous synthetic precipitated silica (precipitated silica), comprising up to 60 phr of rubber reinforcing carbon black and up to 60 phr of silica and, also, a coupling agent for said silica having a moiety reactive with hydroxyl groups (e.g. silanol groups) on said silica and another different moiety interactive with said conjugated diene based elastomers.

In practice, said sidewall rubber composition is preferably a sulfur cured rubber composition.

In practice, a coupling agent for said optional silica reinforcement, if used, may be, for example,
(A) a bis-(3-triakloxysilylalkyl) polysulfide such as, for example, a bis-(3-triethoxysilylpropyl) polysulfide, having an average of from 2 to 4, alternately an average of from 2 to 2.6 or from 3.4 to 3.8, connecting sulfur atoms in its polysulfidic bridge, or
(B) an organoalkoxymercaptosilane.

Such organoalkoxymercaptosilane may be, for example, of the general Formula (I) represented as:

(I) (X)n(R⁷O)₃-n-Si - R⁸- SH

wherein X is a radical selected from a halogen, namely chlorine or bromine and preferably a chlorine radical, and from alkyl radicals having from one to 16, preferably from one through 4, carbon atoms, preferably selected from methyl, ethyl, propyl (e.g. n-propyl) and butyl (e.g. n-butyl) radicals; wherein R⁷ is an alkyl radical having from 1 through 18, alternately 1 through 4, carbon atoms preferably selected from methyl and ethyl radicals and more preferably an ethyl radical; wherein R⁸ is an alkylene radical having from one to 16, preferably from one through 4, carbon atoms, preferably a propylene radical; and n is an average value of from zero through 3, preferably zero, and wherein, in such cases where n is zero or 1, R⁷ may be the same or different for each (R₇O)moiety in the composition, as being capped with a moiety which uncaps the organoalkoxymercaptosilane upon heating to an elevated temperature.

Representative examples of various organoalkoxymercaptosilanes may be, for example, triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, tripropoxy mercaptopropyl silane, ethoxy dimethoxy mercaptopropylsilane, ethoxy diisopropoxy mercaptopropylsilane, ethoxy didodecyloxy mercaptopropylsilane and ethoxy dihexadecyloxy mercaptopropylsilane.

Such organoalkoxymercaptosilanes may be capped with various moieties as discussed above.

A representative example of a capped organoalkoxymercaptosilane coupling agent useful for this invention is a liquid 3-octanoylthio-1-propyltriethoxysilane as an NXT™ Silane from Momentive Performance Materials, formerly GE Silicones, as well as organomercaptosilane oligomers from Momentive Performance Materials.

The coupling agent may, for example, be added directly to the elastomer mixture or may be added as a composite of precipitated silica and such coupling agent as a pre-treated precipitated silica.

For example, said optional silica (e.g. precipitated silica), or at least a portion of said optional silica, may be pre-treated prior to addition to said elastomer(s):
(A) with an alkylsilane, (inclusive of alkoxysilanes), or
(B) with bis(3-triethoxysilylpropyl) polysulfide, or
(C) with organomercaptosilane, or
(D) with a combination of alkylsilane, e.g. alkylsilane of a general Formula (I), and bis(3-triethoxysilylpropyl) polysulfide, or
(E) with a combination of alkylsilane (e.g. alkoxysilane) and organomercaptosilane.

Said alkylsilane may be, for example, of the general Formula (I):

(II) Xₙ- Si-R⁶(₄₋ₙ₎

wherein R⁶ is an alkyl radical having from 1 to 18 carbon atoms, preferably from 1 through 4 carbon atoms; n is a value of from 1 through 3; X is a radical selected from the group consisting of halogens, preferably chlorine, and alkoxy groups selected from methoxy and ethoxy groups, preferably an ethoxy group.

A significant consideration for said pre-treatment the precipitated silica is to pre-hydrophobate the silica to enable the silica be more dispersible in the rubber composition and, also to reduce, or eliminate, evolution of alcohol in situ within the rubber composition during the mixing of the silica with rubber composition such as may be caused, for example, by reaction such coupling agent contained within the elastomer composition with hydroxyl groups (e.g. silanol groups) contained on the surface of the silica.

It is readily understood by those having skill in the art that the rubber compositions would be compounded by methods generally known in the rubber compounding art, such as mixing the synthetic conjugated diene-based elastomers with various commonly used additive materials as may be appropriate such as, for example, curing aids, such as sulfur, activators, retarders and accelerators, processing additives, such as oils, resins including tackifying resins, and plasticizers, pigments, fatty acid, zinc oxide, microcrystalline waxes, antioxidants and antiozonants, peptizing agents and carbon black reinforcing filler.

The vulcanization is conducted in the presence of a sulfur-vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur-vulcanizing agent is elemental sulfur.

Accelerators are used to control the time and/or temperature appropriate for the sulfur vulcanization and to improve the properties of the vulcanizate. In one embodiment, a single accelerator system may be used, i.e., primary accelerator. In another embodiment, combinations of two or more accelerators in which the primary accelerator is generally used in the larger amount, and a secondary accelerator which is generally used in smaller amounts in order to activate and to improve the properties of the vulcanizate. In addition, delayed action accelerators may be used which are not affected by normal processing temperatures but produce satisfactory cures at ordinary vulcanization temperatures. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The tire can be built, shaped, molded and cured by various methods which will be readily apparent to those having skill in such art.

The invention may be better understood by reference to the following example in which the parts and percentages are by weight unless otherwise indicated.

### EXAMPLE I

Experiments were conducted to evaluate significant cured physical properties, uncured rubber tack properties and processability of rubber compositions which are based on containing synthetic elastomers without containing natural cis 1,4-polyisoprene rubber.

Rubber composition Samples A through D were prepared.

Control rubber Sample A was based on containing a significant natural cis 1,4-polyisoprene rubber content.

Experimental rubber Samples B, C and C were based entirely on synthetic elastomers and therefore did not contain natural cis 1,4-polyisoprene rubber.

The rubber Samples were prepared by mixing the elastomers together with reinforcing fillers and other rubber compounding ingredients in a first non-productive mixing stage (NP) an internal rubber mixer for 4 minutes to a temperature of 160°C. The resulting mixture is then mixed in a productive mixing stage (P) in an internal rubber mixer with sulfur curative for 2 minutes to a temperature of 115°C. The rubber composition is cooled to below 40°C between the non-productive mixing step and the productive mixing step.

A basic formulation for the rubber samples is presented in Table 1. The parts are by weight (phr).

**Table 1**

| Non-Productive Mixing Step (NP), (Mixed to 160°C) | Parts |
|---|---|
| Natural cis 1,4-polyisoprene rubber (TRS 20) | 35 or 0 |
| Synthetic high cis 1,4-polybutadiene rubber¹ | 60 to 65 |
| Synthetic trans 1,4-polyisoprene rubber² | 0 and 5 |
| Synthetic cis 1,4-polyisoprene rubber³ | 0 and 35 |
| Carbon black⁴ | 51 |
| Oil, wax and tackifier | 19 |
| Fatty acid⁵ | 1 |
| Antioxidant and antiozonant⁶ | 5.3 |
| Zinc oxide | 2 |
| | |

| Productive Mixing Step (Mixed to 115°C) | |
|---|---|
| Sulfur | 1.9 |
| Sulfur cure accelerator(s)⁷ | 0.6 |

| | |
|---|---|
| ¹Obtained as BUD1207™ from The Goodyear Tire & Rubber Company having a cis 1,4-isomeric content of at least 95 percent ²Trans 1,4-polyisoprene rubber described above with variable Mooney viscosity as TPR301™ from Kururay ³Synthetic cis 1,4-polyisoprene rubber as NAT 2200™ from The Goodyear Tire & Rubber Company ⁴N550, a rubber reinforcing carbon black (an ASTM designation) ⁵Comprising primarily stearic acid, palmitic and oleic acids ⁶Amine and quinoline based ⁷Sulfenamide and quanidine based slfur cure accelerators | |

The following Table 2 illustrates processing behavior of the uncured rubber compositions, cure behavior and various cured properties of the rubber compositions. Where cured rubber samples are examined, the rubber samples were cured for 32 minutes at a temperature of 150°C.

**Table 2**

| | Rubber Samples (phr) | | | |
|---|---|---|---|---|
| | Control | Experimental | | |
| Samples | A | B | C | D |
| Cis 1,4-Polybutadiene rubber | 65 | 65 | 65 | 65 |
| Natural cis 1,4-polyisoprene rubber | 35 | 0 | 0 | 0 |
| Trans 1,4-polyisoprene | 0 | 0 | 2.5 | 5 |
| Synthetic cis 1,4-polyisoprene rubber | 0 | 35 | 32.5 | 30 |
| | | | | |

| Surface Tack | | | | |
|---|---|---|---|---|
| Initial, original tack, Newtons | 5.4 | 3.8 | 4.4 | 4.6 |
| | | | | |

| Green Strength, 240% strain. 23°C, (MPa) | | | | |
|---|---|---|---|---|
| Stress strain modulus of uncured rubber composition | 0.26 | 0.18 | NE | 0.47 |
| | | | | |

| RPA Strain Sweep. 100°C¹ | | | | |
|---|---|---|---|---|
| Modulus G', at 10% strain (kPa) | 763 | 774 | 766 | 763 |
| Tan delta at 10% strain | 0.11 | 0.11 | 0.11 | 0.10 |
| | | | | |

| Stress-strain, (cured rubber composition) ATS. 32 min. 150°C² | | | | |
|---|---|---|---|---|
| Tensile strength (MPa) | 13.1 | 13.4 | 13.7 | 13.4 |
| Elongation at break (%) | 654 | 689 | 711 | 693 |
| 300% modulus (MPa) | 4.9 | 4.7 | 4.7 | 4.8 |
| | | | | |
| Shore A Hardness, 100°C | 44 | 45 | 45 | 44 |
| Rebound, 100°C | 57 | 57 | 57 | 57 |
| | | | | |

| Static ozone resistance⁴ | | | | |
|---|---|---|---|---|
| Crack density (number of cracks) | 4 | 2 | 3 | 3 |
| Crack severity | 2 | 2 | 2 | 2 |
| Rank | 3 | 1 | 2 | 2 |
| | | | | |

| Dynamic (cyclic) ozone resistance (21 day test)⁵ | | | | |
|---|---|---|---|---|
| Crack density (number of cracks/severity) | 5/5 | 5/5 | 5/5 | 5/5 |
| Days to failure (during the 21 days of test) | 17 | 17 | 21 | 16 |
| Rank | 2 | 2 | 1 | 3 |
| | | | | |
| Tear strength, (self) 95°C, (Newtons)⁶ | 204 | 190 | 202 | 194 |
| Crack growth resistance at 23°C, cut length | | | | |
| in mm at 240 minutes | 14.1 | 6.9 | 7.4 | 5.9 |

| | | | | |
|---|---|---|---|---|
| NE = not evaluated (Green Strength for rubber Sample C) ¹Data according to Rubber Process Analyzer instrument ²Data according to Automated Testing System instrument ³Crack growth resistance measured by a Pierced Groove Flex test conducted at 93°C at 360 cycles/min using a conical piercing needle 1/32" in diameter using a 6" x 1.5" x 0.25" sample using 180° flex wherein the flex region is a 1/4" diameter molded groove against the grain of the sample. The results are reported in terms of millimeters of crack growth after one hour. ⁴Static ozone test conditions: 48 hrs; 40°C; variable strain; 50 pphm ozone (50 parts per 100 million ozone concentration) ⁵Dynamic (cyclic) ozone test conditions: 21 days or until sample breaks; 38°C; 25 percent strain; 50 pphm ozone. ⁶Data obtained according to a tear strength (peal adhesion) test to determine interfacial adhesion between two samples of a rubber composition. In particular, such interfacial adhesion is determined by pulling one rubber composition away from the other at a right angle to the untorn test specimen with the two ends of the rubber compositions being pulled apart at a 180° angle to each other using an Instron instrument at 95°C and reported as Newtons force. The area of contact at the interface between the rubber samples is facilitated by placement of a Mylar™ film between the samples with a cut-out window in the film to enable the two rubber samples to contact each other following which the samples are vulcanized together and the resultant composite of the two rubber compositions used for the peel strength test. | | | | |

For the Static and Dynamic ozone tests:
(A) Crack density relates to the number of observed cracks on the surface of a respective Sample where a value of zero means no observed cracks and a value of 1 means a few observed cracks (less than three observed cracks) with progressively higher numbered values representing a progressively larger number of cracks.
(B) Crack severity relates to the average length of the observed cracks in the surface of a respective Sample where a value of zero means no observed cracks and a value of 1 means short observed cracks and progressively higher numbered values mean observed cracks with progressively longer average lengths.
(C) Rank relates to a visual ranking of a respective individual Sample in the respective Table of Samples in terms of a combination of observed crack density and crack severity and whether the Sample breaks during the 21 day test where a value of 1 relates to the Sample with best visual appearance in terms of crack density and crack severity and samples with progressively higher values relate to Samples with a progressively worse visual appearance in terms of a combination of crack density and crack severity.

Significant physical properties for the tire sidewall rubber composition for replacing the natural rubber based rubber composition (Control Rubber Sample A) with all synthetic rubber compositions (Experimental rubber Samples B, C and D) for this experimentation include:
(A) processing, particularly green strength, and tack, namely building tack, for the uncured rubber compositions;
(B) cut growth resistance and tear resistance properties for the cured rubber compositions.

Green strength for the uncured rubber composition is normally desired to help maintain a rubber component's gauge and shape after an extrusion process for preparing the uncured rubber component prior to its curing. For the green (uncured) tire it also helps to maintain control of the gauge and shape of its assembly of individual uncured rubber components during the shaping process of the green tire in the tire mold before the rubber tire components become cured within the tire mold.

Building tack for the uncured rubber composition is normally desired to promote and maintain the required adhesion between various rubber components of the tire during the tire building and shaping processes where uncured rubber components are assembled to form the tire and the uncured tire assembly shaped in a suitable tire mold. Good building tack for the tire assembly of uncured rubber components can also manifest itself in good cured adhesion between the various tire components after the tire is cured and removed from the tire curing mold.

Crack growth resistance is normally desired to promote resistance, or retard, progressive growth of nicks or cuts in the cured rubber composition that may occur in the tire sidewall surface during use of the tire.

Tear resistance is normally desired to promote resistance to crack growth in the cured rubber composition by reducing the growth of a crack initiated at a growing crack tip. Good tear resistance can also relate to good cured adhesion between splices or between rubber layers of a tire component or good cured adhesion between various rubber components of the tire.

For the uncured rubber processing properties of the rubber Samples, it can be seen from Table 2 that:
(A) Uncured rubber Sample A, the Control, which contains the combination of natural rubber and synthetic cis 1,4-polybutadiene rubber, has a higher tack value than experimental rubber Sample B which contains synthetic cis 1,4-polyisoprene rubber as a total replacement for the natural rubber of Control rubber Sample A.
(B) However, Experimental rubber Samples C and D, which contained a combination of synthetic cis 1,4-polyisoprene rubber and synthetic cis 1,4-polybutadiene in addition of 2.5 and 5 phr of trans 1,4-polyisoprene, respectively, demonstrate improved tack values as compared to Experimental rubber Sample B.
(C) Further, Experimental rubber Sample D, which contained 5 phr of the trans 1,4-polyisoprene exhibits an improved green strength, which is actually better than the value for Control rubber Sample A.
(D) The indicated improved property improvements for Experimental rubber Samples C and D, which contained the trans 1,4-polyisoprene, will provide improved rubber processing for the uncured rubber compositions, as mentioned earlier, as compared to the indicated rubber processing property loss exhibited by Experimental rubber Sample B without the trans 1,4-polyisoprene.

For the cured rubber properties of the rubber Samples, it can be seen from Table 2 that:
(A) the RPA, Stress-Strain, hardness and rebound and tear strength properties for Experimental rubber Sample B remained substantially unchanged by replacing the natural rubber of Control rubber Sample A with synthetic cis 1,4-polyisoprene rubber.
(B) However, static ozone resistance is seen to be improved for rubber Sample B which contained synthetic cis 1,4-polyisoprene to replace the natural cis 1,4-polyisoprene of Control rubber Sample A as evidenced by the reduced crack density and severity. Some, although lesser, improvement in static ozone resistance is seen for Experimental rubber Samples C and D which further and additionally contained 2.5 and 5 phr, respectively, of the trans 1,4-isoprene.
(C) Dynamic ozone resistance was similar for the Control rubber Sample A and Experimental rubber Samples B and D. However Experimental rubber Sample C, which contained the additional 2.5 phr of trans 1,4-polyisoprene, which exhibited more days to failure during the test cycle.
(D) Cut growth resistance for Control rubber Sample A was inferior to the values for all of Experimental rubber Samples B, C and D which did not contain the natural rubber of Control rubber Sample A

Therefore, it is concluded that the replacement of the natural cis 1,4-polyisoprene rubber of Control rubber Sample A with synthetic rubber for Experimental rubber Sample B as well for Experimental rubber Samples C and D which additionally contained a small amount of synthetic trans 1,4-polyisoprene, can provide rubber compositions of excellent uncured green strength and tack which provide a better match for a natural rubber based rubber composition (Control rubber Sample A) for an outer tire sidewall component without sacrificing other indicated laboratory tested rubber properties for Experimental rubber Samples B, C and D. Further, it is concluded that the indicated synthetic rubber blends can also provide some improvement in cured rubber properties such as, for example, ozone resistance and cut growth resistance as compared to the natural rubber containing rubber composition of Control rubber Sample A.

## Claims

1. A tire having an outer, visible, rubber sidewall layer wherein the outer sidewall layer is a rubber composition comprising, based upon parts by weight per 100 parts by weight rubber (phr):
(A) elastomers consisting of synthetic conjugated diene based elastomers consisting of:
(1) 1 to 20 phr of synthetic trans 1,4-polyisoprene having trans 1,4- isomeric content of at least 95 percent;
(2) 30 to 70 phr, alternately 45 to 65 phr of:
(a) a synthetic cis 1,4-polybutadiene rubber having a cis 1,4- isomeric content of at least 95 percent, or
(b) a synthetic polybutadiene rubber having a cis 1,4-isomeric content in a range of from 20 to 50 percent, a trans 1,4-isomeric content in a range of from 40 to 70 percent, and a vinyl 1,2 content in a range of from 5 to 15 percent; and
(3) 20 to 60 phr of synthetic cis 1,4-polyisoprene rubber having a cis 1,4-isomeric content of at least 95 percent;
(B) 30 to 70 phr of a particulate reinforcing filler comprising:
(1) a rubber reinforcing carbon black, or
(2) a combination of a rubber reinforcing carbon black and a silica, preferably a precipitated silica, comprising up to 60 phr of the rubber reinforcing carbon black and up to 60 phr of the silica and, also, a coupling agent for the silica having a moiety reactive with hydroxyl groups on the silica and another different moiety interactive with said conjugated diene based elastomers.

2. The tire of claim 1 wherein the sidewall rubber composition is a sulfur cured rubber composition.

3. The tire of claim 1 or 2 wherein the synthetic conjugated diene based elastomers consist of the synthetic trans 1,4-polyisoprene, the synthetic cis 1,4-polybutadiene rubber having a cis 1,4-isomeric content of at least 95 percent, and the synthetic cis 1,4-polyisoprene rubber.

4. The tire of claim 1 or 2 wherein the synthetic conjugated diene-based elastomers consist of the synthetic trans 1,4-polyisoprene, the synthetic cis 1,4-polybutadiene rubber having a cis 1,4-isomeric content in a range of from 20 to 50 percent, a trans 1,4-isomeric content in a range of from 40 to 70 percent, and a vinyl 1,2 content in a range of from 5 to 15 percent and the synthetic cis 1,4-polyisoprene rubber.

5. The tire of at least one of the previous claims where the coupling agent for the silica comprises:
(A) a bis-(3-triakloxysilylalkyl) polysulfide having an average of from 2 to 4 connecting sulfur atoms in its polysulfidic bridge, or
(B) an organoalkoxymercaptosilane.

6. The tire of claim 5 wherein said coupling agent is a bis-(3-trialkoxysilylalkyl) polysulfide comprising bis-(3-triethoxysilylpropyl) polysulfide.

7. The tire of claim 5 wherein the organoalkoxymercaptosilane is of the general Formula (I) represented as:
(I) (X)ₙ(R⁷O)₃₋ₙ- Si - R⁸- SH
wherein X is a radical selected from a halogen, namely chlorine or bromine and preferably a chlorine radical, and from alkyl radicals having from one to 16, preferably from one through 4, carbon atoms, preferably selected from methyl, ethyl, propyl (e.g. n-propyl) and butyl (e.g. n-butyl) radicals; wherein R⁷ is an alkyl radical having from 1 through 18, alternately 1 through 4, carbon atoms preferably selected from methyl and ethyl radicals and more preferably an ethyl radical; wherein R⁸ is an alkylene radical having from one to 16, preferably from one through 4, carbon atoms, preferably a propylene radical; and n is an average value of from zero through 3, preferably zero, and wherein, in such cases where n is zero or 1, R⁷ may be the same or different for each (R₇O) moiety in the composition, as being capped with a moiety which uncaps the organoalkoxymercaptosilane upon heating to an elevated temperature.

8. The tire of claim 5 or 7 wherein the organoalkoxymercaptosilane comprises one or more of triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, tripropoxy mercaptopropyl silane, ethoxy dimethoxy mercaptopropylsilane, ethoxy diisopropoxy mercaptopropylsilane, ethoxy didodecyloxy mercaptopropylsilane and ethoxy dihexadecyloxy mercaptopropylsilane.

9. The tire of at least one of the previous claims comprising a precipitated silica pre-treated with the coupling agent.

10. The tire of at least one of the previous claims comprising a precipitated silica pre-treated with:
(A) an alkylsilane, or
(B) a bis(3-triethoxysilylpropyl) polysulfide, or
(C) an organomercaptosilane, or
(D) a combination of an alkylsilane and bis(3-triethoxysilylpropyl) polysulfide, or
(E) a combination of alkylsilane and organomercaptosilane.

11. The tire of claim 11 wherein the alkyl silane is an alkoxysilane.

## Patentansprüche

1. Reifen mit einer äußeren, sichtbaren, Kautschuk-Seitenwandschicht, wobei die äußere Seitenwandschicht eine Kautschukzusammensetzung ist, umfassend, auf Basis von Gewichtsteilen je 100 Gewichtsteile Kautschuk (ThK):
(A) Elastomere bestehend aus synthetischen Elastomeren auf Basis konjugierten Diens, bestehend aus:
(1) 1 bis 20 ThK synthetischem trans-1,4-Polyisopren mit einem trans-1,4-Isomergehalt von mindestens 95 Prozent;
(2) 30 bis 70 ThK, alternativ 45 bis 65 ThK, eines:
(a) synthetischen cis-1,4-Polybutadienkautschuks mit einem cis-1,4-Isomergehalt von mindestens 95 Prozent, oder
(b) synthetischen Polybutadienkautschuks mit einem cis-1,4-Isomergehalt im Bereich von 20 bis 50 Prozent, einem trans-1,4-Isomergehalt im Bereich von 40 bis 70 Prozent, und einem Vinyl-1,2-Gehalt im Bereich von 5 bis 15 Prozent; und
(3) 20 bis 60 Prozent synthetischem cis-1,4-Polyisoprenkautschuk mit einem cis-1,4-Isomergehalt von mindestens 95 Prozent;
(B) 30 bis 70 ThK eines partikelförmigen Verstärkungsfüllmittels, umfassend:
(1) ein Kautschukverstärkungs-Carbon Black, oder
(2) eine Kombination eines Kautschukverstärkungs-Carbon Blacks und eines Silikas, bevorzugt eines ausgefällten Silikas, umfassend bis zu 60 ThK von dem Kautschukverstärkungs-Carbon Black und bis zu 60 ThK von dem Silika, und auch einen Haftvermittler für das Silika mit einem Anteil, der mit Hydroxylgruppen an dem Silika reaktiv ist, und einem anderen, verschiedenen Anteil, der mit den Elastomeren auf Basis konjugierten Diens in Wechselwirkung tritt.

2. Reifen nach Anspruch 1, wobei die Seitenwand-Kautschukzusammensetzung eine schwefelvulkanisierte Kautschukzusammensetzung ist.

3. Reifen nach Anspruch 1 oder 2, wobei die synthetischen Elastomere auf Basis konjugierten Diens aus dem synthetischen trans-1,4-Polyisopren, dem synthetischen cis-1,4-Polybutadienkautschuk mit einem cis-1,4-Isomergehalt von mindestens 95 Prozent, und dem synthetischen cis-1,4-Polyisoprenkautschuk bestehen.

4. Reifen nach Anspruch 1 oder 2, wobei die synthetischen Elastomere auf Basis konjugierten Diens aus dem synthetischen trans-1,4-Polyisopren, dem synthetischen cis-1,4-Polybutadienkautschuk mit einem cis-1,4-Isomergehalt im Bereich von 20 bis 50 Prozent, einem trans-1,4-Isomergehalt im Bereich von 40 bis 70 Prozent und einem Vinyl-1,2-Gehalt im Bereich von 5 bis 15 Prozent, und dem synthetischen cis-1,4-Polyisoprenkautschuk bestehen.

5. Reifen nach mindestens einem der vorgenannten Ansprüche, wobei der Haftvermittler für das Silika umfasst:
(A) ein Bis-(3-trialkoxysilylalkyl)polysulfid mit einem Durchschnitt von 2 bis 4 verbindenden Schwefelatomen in seiner Polysulfidbrücke, oder
(B) ein Organoalkoxymercaptosilan.

6. Reifen nach Anspruch 5, wobei der Haftvermittler ein Bis-(3-trialkoxysilylalkyl)polysulfid ist, das Bis-(3-triethoxysilylpropyl)polysulfid umfasst.

7. Reifen nach Anspruch 5, wobei das Organoalkoxymercaptosilan die allgemeine Formel (I) hat, dargestellt als:
(I) (X)ₙ(R⁷O)₃₋ₙ - Si - R⁸ - SH
wobei X ein Radikal ist, ausgewählt aus einem Halogen, nämlich Chlor oder Brom und bevorzugt ein Chlorradikal, und aus Alkylradikalen mit ein bis 16, bevorzugt ein bis einschließlich 4, Kohlenstoffatomen, bevorzugt ausgewählt aus Methyl-, Ethyl-, Propyl- (z.B. n-Propyl-) und Butyl- (z.B. n-Butyl-) -Radikalen; wobei R⁷ ein Alkylradikal mit 1 bis einschließlich 18, alternativ 1 bis einschließlich 4, Kohlenstoffatomen, bevorzugt ausgewählt aus Methyl- und Ethyl-Radikalen und bevorzugter ein Ethylradikal, ist; wobei R⁸ ein Alkylenradikal mit ein bis 16, bevorzugt ein bis einschließlich 4, Kohlenstoffatomen, bevorzugt ein Propylenradikal ist; und n ein Durchschnittswert von Null bis einschließlich 3, bevorzugt Null, ist, und wobei, in den Fällen, worin n Null oder 1 ist, R⁷ für jeden (R⁷O)-Anteil in der Zusammensetzung das gleiche oder verschieden sein kann, endverschlossen mit einem Anteil, der das Organoalkoxymercaptosilan bei Erwärmung auf eine erhöhte Temperatur aufschließt.

8. Reifen nach Anspruch 5 oder 7, wobei das Organoalkoxymercaptosilan eines oder mehr von Triethoxymercaptopropylsilan, Trimethoxymercaptopropylsilan, Methyldimethoxymercaptopropylsilan, Methyldiethoxymercaptopropylsilan, Dimethylmethoxymercaptopropylsilan, Triethoxymercaptoethylsilan, Tripropoxymercaptopropylsilan, Ethoxydimethoxymercaptopropylsilan, Ethoxydiisopropoxymercaptopropylsilan, Ethoxydidodecyloxymercaptopropylsilan und Ethoxydihexadecyloxymercaptopropylsilan umfasst.

9. Reifen nach mindestens einem der vorgenannten Ansprüche, umfassend ein ausgefälltes Silika, das mit dem Haftvermittler vorbehandelt ist.

10. Reifen nach mindestens einem der vorgenannten Ansprüche, umfassend ein ausgefälltes Silika, vorbehandelt mit:
(A) einem Alkylsilan, oder
(B) einem Bis(3-triethoxysilylpropyl)polysulfid, oder
(C) einem Organomercaptosilan, oder
(D) einer Kombination eines Alkylsilans und eines Bis(3-triethoxysilylpropyl)polysulfids,
(E) einer Kombination von Alkylsilan und Organomercaptosilan.

11. Reifen nach Anspruch 11, wobei das Alkylsilan ein Alkoxysilan ist.

## Revendications

1. Bandage pneumatique possédant une couche de flanc externe en caoutchouc visible, dans lequel la couche de flanc externe représente une composition de caoutchouc comprenant, en se basant sur des parties en poids par 100 parties en poids de caoutchouc (phr) :
(A) des élastomères constitués par des élastomères à base de diènes conjugués synthétiques constitués par :
(1) à concurrence de 1 à 20 phr, du 1,4-trans-polyisoprène synthétique possédant une teneur en isomère 1,4 à concurrence d'au moins 95 % ;
(2) à concurrence de 30 à 70 phr, en variante de 45 à 65 phr :
(α) un caoutchouc synthétique de 1,4-cis-polybutadiène possédant une teneur en isomère 1,4 à concurrence d'au moins 95 % ; ou
(b) un caoutchouc synthétique de polybutadiène possédant une teneur en isomère 1,4 dans la plage de 20 à 50 %, une teneur en isomère 1,4-trans dans la plage de 40 à 70 %, et une teneur en groupe 1,2-vinyle dans la plage de 5 à 15 % ; et
(3) à concurrence de 20 à 60 phr de caoutchouc synthétique de 1,4-cis-polyisoprène possédant une teneur en isomère 1,4-cis à concurrence d'au moins 95 % ;
(B) à concurrence de 30 à 70 phr, une matière de charge particulaire pour le renforcement comprenant :
(1) un noir de carbone pour le renforcement du caoutchouc ; ou
(2) une combinaison d'un noir de carbone pour le renforcement du caoutchouc et d'une silice, de préférence une silice précipitée, comprenant le noir de carbone pour le renforcement du caoutchouc jusqu'à concurrence de 60 phr et la silice jusqu'à concurrence de 60 phr, mais également un agent de couplage pour la silice possédant une fraction apte à réagir avec les groupes hydroxyle sur la silice et une autre fraction différente qui entre en interaction avec lesdits élastomères à base de diènes conjugués.

2. Bandage pneumatique selon la revendication 1, dans lequel la composition de caoutchouc de flanc représente une composition de caoutchouc vulcanisé au soufre.

3. Bandage pneumatique selon la revendication 1 ou 2, dans lequel les élastomères synthétiques à base de diènes conjugués sont constitués par le 1,4-trans-polyisoprène synthétique, le 1,4-cis-polybutadiène synthétique possédant une teneur en isomère 1,4-cis à concurrence d'au moins 95 %, et le caoutchouc synthétique de 1,4-cis-polyisoprène.

4. Bandage pneumatique selon la revendication 1 ou 2, dans lequel les élastomères synthétiques à base de diènes conjugués sont constitués par le 1,4-trans-polyisoprène synthétique, le 1,4-cis-polybutadiène synthétique possédant une teneur en isomère 1,4-cis dans la plage de 20 à 50 %, une teneur en isomère 1,4-trans dans la plage de 40 à 70 %, et une teneur en groupe 1,2-vinyle dans la plage de 5 à 15 %, et le caoutchouc synthétique de 1,4-cis-polyisoprène.

5. Bandage pneumatique selon au moins une des revendications précédentes, dans lequel l'agent de couplage pour la silice ou comprend :
(A) un bis-(3-trialcoxysilylalkyl) polysulfure possédant en moyenne 2 à 4 atomes de soufre de liaison dans son pont polysulfure ; ou
(B) un organoalcoxymercaptosilane.

6. Bandage pneumatique selon la revendication 5, dans lequel ledit agent de couplage est un bis-(3-trialcoxysilylalkyl) polysulfure comprenant du bis-(3-triéthoxysilylpropyl) polysulfure.

7. Bandage pneumatique selon la revendication 5, dans lequel l'organoalcoxymercaptosilane répond à la formule générale (I) représentée par :
(I) (X)ₙ(R⁷O)₃₋ₙ-Si-R⁸-SH
dans laquelle X représente un radical choisi parmi un atome d'halogène, plus précisément un atome de chlore ou un atome de brome, et de préférence un radical de chlore, et parmi des radicaux alkyle contenant de 1 à 16, de préférence de 1 à 4 atomes de carbone, choisi de préférence parmi le groupe comprenant un groupe méthyle, un groupe éthyle, un groupe propyle (par exemple un groupe n-propyle) et un groupe butyle (par exemple un groupe n-butyle) ; dans laquelle R⁷ représente un radical alkyle contenant de 1 à 18, en variante de 1 à 4 atomes de carbone, choisi de préférence parmi un groupe méthyle et un groupe éthyle, de manière plus préférée un radical éthyle ; dans laquelle R⁸ représente un radical alkylène contenant de 1 à 16, de préférence de 1 à 4 atomes de carbone, de préférence un radical propylène ; et n représente une valeur moyenne entre 0 et 3, de préférence 0 ; et dans laquelle, dans le cas où n est égal à zéro, R⁷ peut être identique ou différent pour chaque fraction (R⁷O) dans la composition, à l'état coiffé avec une fraction qui décoiffe l'organoalcoxymercaptosilane lorsqu'on chauffe à une température élevée.

8. Bandage pneumatique selon la revendication 5 ou 7, dans lequel l'organoalcoxymercaptosilane comprend un ou plusieurs membres choisis parmi le groupe comprenant le triéthoxy mercaptopropyl silane, le triméthoxy mercaptopropyl silane, le méthyl diméthoxy mercaptopropyl silane, le méthyl diéthoxy mercaptopropyl silane, le diméthyl diméthoxy mercaptopropyl silane, le triéthoxy mercaptoéthyl silane, le tripropoxy mercaptopropyl silane, l'éthoxy diméthoxy mercaptopropyl silane, l'éthoxy diisopropoxy mercaptopropyl silane, l'éthoxy didodécyloxy mercaptopropyl silane et l'éthoxy dihexadécyloxy mercaptopropyl silane.

9. Bandage pneumatique selon au moins une des revendications précédentes, comprenant une silice précipitée qui a été prétraitée avec l'agent de couplage.

10. Bandage pneumatique selon au moins une des revendications précédentes, comprenant une silice précipitée qui a été prétraitée avec :
(A) un alkylsilane ; ou
(B) un bis-(3-triéthoxysilylpropyl) polysulfure ; ou
(C) un organomercaptosilane ; ou
(D) une combinaison d'un alkylsilane et d'un bis-(3-triéthoxysilylpropyl) polysulfure ; ou
(E) une combinaison d'un alkylsilane et d'un organomercaptosilane.

11. Bandage pneumatique selon la revendication 11, dans lequel l'alkylsilane est un alcoxysilane.
